# EUROPÄISCHE PATENTSCHRIFT

(11) **EP 0 889 012 B1**
(45) Veröffentlichungstag und Bekanntmachung des Hinweises auf die Patenterteilung: **10.10.2001**
(21) Anmeldenummer: 98111284.0
(22) Anmeldetag: 18.06.1998
(51) Int. Cl.: C04B 30/00, B60R 13/08, F01N 7/14, B62D 29/00

(54) **Verfahren zum Füllen von Hohlräumen in Werkstücken oder Halbzeugen und Bauelement zum An- oder Einbau in ein Kraftfahrzeug**
Process for filling cavities in workpieces or semi-finished products and components for mounting in a vehicle
Procédé de remplissage de cavités dans des pièces ou produits semi-finis et composant à monter dans un véhicule

(30) Priorität: 01.07.1997 DE 19727907
(43) Veröffentlichungstag der Anmeldung: 07.01.1999
(73) Patentinhaber: DaimlerChrysler AG, 70567 Stuttgart (DE)
(72) Erfinder: Eipper, Konrad, 72119 Ammerbuch (DE); Fussnegger, Wolfgang, 72074 Tübingen (DE)

(56) Entgegenhaltungen:
- WO-A-96/36660
- DE-A- 3 323 801
- DE-A- 3 625 080
- DE-A- 3 826 011
- DE-C- 4 039 863
- US-A- 4 285 909
- CHEMICAL ABSTRACTS, vol. 110, no. 16, 17. April 1989 Columbus, Ohio, US; abstract no. 140411z, S. TAKAHASHI, ET AL: Seite 329; XP000058885 & JP 63 247588 A (ID.)

## Beschreibung

Die vorliegende Erfindung betrifft ein Verfahren zum Füllen von Hohlräumen in Werkstücken oder Halbzeugen sowie ein Bauelement, insbesondere Werkstück oder Halbzeug, zum An- oder Einbau in ein Kraftfahrzeug.

Zu Zwecken der Schalldämmung und/oder Verbesserung der Stabilität von Kfz-Blechstrukturen, die als Hohlprofile ausgeführt sind, ist es bekannt, derartige Hohlräume mit Schaumstoff-Körpern auszufüllen.

Aus der DE 4016710 ist ein Verfahren zur Herstellung von Formteilen bekannt bei welchem die Formteile durch Erhitzen von Blähgraphit hergestellt werden, indem man den Blähgraphit zunächst bei 140°C bis 450°C vorexpandiert bis zu einem bestimmten Schüttgewicht, dann die Form zu mindestens 50 Vol% mit so expandiertem Blähgraphit füllt und dann durch Erhitzen auf Temperaturen im Bereich von 300°C bis 700°C die Expansion des Blähgraphits zu Ende führt.

Aus der DE 3625080 ist die Verwendung einer thermisch expandierbare Masse bekannt, zur im Brandfall wirkasamen Abdichtung von Öffnungen in Bauteilen, wie z.B Hohl- bzw. Zwischenräumen oder dergleichen, wobei die Masse auf der Basis von Blähgraphit, Polyurethanharzen und im Brandfall ein parakristalines Kohlenstoffgerüst bildenden Substanzen enthält.

Aus der DE-OS 38 26 012 ist ein Verfahren zum Füllen von Hohlkörpern bekannt, wobei in den Hohlraum des Hohlkörpers ein aus einem offenzelligen Schaumstoff bestehender Körper eingeführt wird, der vollständig mit einer gasundurchlässigen Haut überzogen ist. Diese Haut besitzt wenigstens eine Öffnung, an die beim Einführen des Schaumstoffkörpers ein Vakuum zur Komprimierung des Schaumstoff-Körpers angelegt wird. Nach dem Einführen in den Hohlraum läßt man den kontrahierten Schaumstoff-Körper durch Beseitigung des Vakuums expandieren, so daß er dann den Hohlraum ausfüllt.

Aus der DE 40 28 895 C1 ist ein weiteres Verfahren zum Füllen von Hohlräumen bekannt, bei dem ein gegenüber dem Querschnitt des zu füllenden Hohlraums ein Übermaß aufweisender Schaumstoffkörper aus elastischem und komprimierbarem Kunststoffschaum mechanisch durch eine auf Untermaß bemessene Umhüllung aus Kunststoff komprimiert und im komprimierten Zustand in den Karosseriehohlraum eingeführt wird. Dort wird der komprimierte Schaumstoffkörper in seiner späteren Lage innerhalb des zu füllenden Hohlraums vorläufig mechanisch gesichert.

Der den Schaumstoffkörper umhüllende Kunststoff ist nur bis zu einer bestimmten Grenztemperatur beständig, so daß durch Aufheizen des Karosseriehohlraums zusammen mit dem Schaumstoff-Körper bis wenigstens an den Schmelzpunkt der Umhüllung ein Aufheben der Kompression des Schaumstoff-Körpers erfolgt, so daß sich der Schaumstoffkörper innenseitig unter Vorspannung an den Karosseriehohlraum anlegt.

Aus der DE 42 27 393 A1 ist ein Träger mit einem äußeren metallenen Hohlkörper und einem Leichtstoffkern bekannt, wobei der Kern eine elektrisch leitende Schicht trägt und unterhalb dieser Schicht einen Mantel mit durch Wärmezufuhr aufschäumbarem Material aufweist und für den Schäumvorgang eine ohnehin erforderliche Wärmezufuhr ausgenutzt wird, die beispielsweise zum Verschweißen der Teile eines mehrteiligen Hohlkörpers und/oder für eine Tauchlackierung in heißem Lack erfolgt.

Aus der DE 40 38 979 A1 ist ein Doppelrohr mit einem starren Außenrohr bekannt, dessen Innenrohr einen in situ plastisch verformten, radial aufgeweiteten Rohrkörper bildet, der einen um das Innenrohr angeordneten Isolationsmantel verdichtend gegen die Innenmantelfläche des Außenrohres preßt.

Bekannt sind auch als Metall/Kunststoff-Verbund ausgebildete Sandwich-Halbzeuge, bei denen ebene oder auch geformte Bleche auf Abstand zueinander gehalten und der Zwischenraum mit Kunststoffschaum ausgefüllt ist. Nachteilig an solchen Verbund-Konstruktionen ist, daß der Kunststoffschaum gewisse Probleme beim Recycling der Karosserie bzw. der Halbzeuge nach der Erschöpfung der Produktlebensdauer bereitet. Eine stoffliche Trennung in Metall und Kunststoff ist praktisch ebensowenig möglich wie eine gemeinsame Altstoff-Verwertung.

Es ist ferner bekannt, Kohlenstoff-Schaum - für sich oder eingebracht in Hohlräume - aus einem Kunststoffschaum durch Carbonisierung zu erzeugen. Diese Herstellungsart geschäumter Hohlräume ist jedoch sehr aufwendig. Außerdem ist diese Art von Kohlenstoff-Schaum nur bei hohen Carbonisierungs-Temperaturen und nicht an lackierten Gegenständen durchführbar. Darüber hinaus sind diese Kohlenstoffschäume nicht duktil.

Ausgehend hiervon liegt der Erfindung die Aufgabe zugrunde, ein Verfahren zum Füllen von Hohlräumen in Werkstücken oder Halbzeugen dahingehend zu verbessern, daß die Hohlräume auf einfachere Art und Weise ausschäumbar sind. Des weiteren liegt der Erfindung die Aufgabe zugrunde, ein Bauelement, insbesondere Werkstück oder Halbzeug, zum An- oder Einbau in ein Kraftfahrzeug bereitzustellen, dessen Hohlräume auf einfachere Art und Weise ausschäumbar sind.

Zur Lösung dieser Aufgabe wird zum einen ein Verfahren mit den Merkmalen des Anspruches 1 vorgeschlagen. Durch das erfindungsgemäße lagesichere Einbringen von Kohlenstoff-Pulver ist die zum Aufschäumen von Kohlstoff-Schaum notwendige Fixierung des Pulvers in dem Hohlraum gewährleistet, so daß ein Schäumvorgang ohne zusätzliche Form ermöglicht und das gezielte Ausschäumen von Hohlräumen gestattet wird.

In Ausgestaltung der Erfindung dient der auszuschäumende Hohlraum selbst als Form für den Kohlenstoff-Schaum, was insbesondere bei doppelwandigen Werkstücken, wie Rohren und Profilen, also bei Hohlräumen mit ausreichend kleinem Querschnitt, geeignet ist.

In anderer Ausgestaltung der Erfindung wird das Kohlenstoff-Pulver zum lagesicheren Einbringen in den Hohlraum in verschlossenen Aluminium-Folienbeuteln hermetisch eingeschlossen angeordnet, und der derart befüllte Beutel wird an geeigneter Stelle lagesicher in dem auszufüllenden Hohlraum angeordnet. Vorteilhafterweise handelt es sich bei dem Folienbeutel um einen gefalteten Beutel, der durch die Faltung in der Lage ist, beim Aufschäumen des Kohlenstoff-Pulvers mit diesem sich zu entfalten und auszudehnen, so daß eine Anpassung des Füllmaterials an die auszuschäumende Kontur ermöglicht wird. Eine Verwendung von Kunststoffbeuteln, wie sie aus dem Stand der Technik bekannt ist, ist in der Verbindung mit Kohlenstoff-Pulver nicht geeignet, da aufgrund der hohen Schäumtemperaturen von ca. 130°C der Kunststoff frühzeitig schmelzen würde und somit die Lagesicherung des Kohlenstoff-Pulvers nicht gewährleistet wäre.

In weiterer Ausgestaltung der Erfindung erfolgt das Beheizen durch einen zur weiteren Bearbeitung des Werkstücks oder Halbzeugs notwendigen Arbeitsvorgang. Durch diese erfindungsgemäße Maßnahme wird die ohnehin für einen nachfolgenden Erhitzungsvorgang aufzuwendende Energie auch für den Aufschäumvorgang genutzt. Dies erweist sich insbesondere in der Ausgestaltung nach Anspruch 5 als vorteilhaft, wonach zum Füllen von Karosseriehohlräumen das Kohlenstoff-Pulver bereits in der Rohbauphase der Karosserie in die Hohlräume eingebracht wird, mit der Karosserie eine Tauchlackierung durchläuft und das Aufschäumen gemeinsam mit dem Einbrennen des Tauchlacks erfolgt.

In anderer Ausgestaltung der Erfindung erfolgt das Beheizen durch die Inbetriebnahme der bestimmungsgemäßen Verwendung des Werkstücks. Auch hier wird ein ohnehin erfolgendes Aufheizen des den zu füllenden Hohlraum umfassenden Werkstücks zum Auslösen des Aufschäumvorgangs genutzt, wobei es sich hierbei um die ordnungsgemäße Inbetriebnahme des Werkstücks handelt. Dieses Vorgehen erweist sich bei Werkstücken, die beim bestimmungsgemäßen Betrieb regelmäßig stark aufgeheizt werden, als besonders vorteilhaft, wie beispielsweise bei der Ausgestaltung des erfindungsgemäßen Verfahrens nach Anspruch 7, bei dem zum Füllen von Doppelwandungshohlräumen eines doppelwandigen Auspuffrohres das Kohlenstoff-Pulver vor der Endmontage in die zu füllenden Doppelwandungshohlräume eingebracht wird und das Aufschäumen beim ersten Erreichen der Betriebstemperatur des Auspuffrohres erfolgt.

Zur weiteren Lösung der der Erfindung zugrundeliegenden Aufgabe wird erfindungsgemäß ein Bauelement mit den Merkmalen des Anspruches 8 vorgeschlagen. Das erfindungsgemäße Bauelement, bei dem es sich insbesondere um ein Werkstück oder Halbzeug handelt, ist zum An- oder Einbau in ein Kraftfahrzeug vorgesehen und verfügt über mindestens einen abgeschlossenen Hohlraum, in welchen thermisch aufschäumbares Kohlenstoff-Pulver lagesicher eingebracht ist, wobei zum Aufquellen des Kohlenstoff-Pulvers zur Bildung von den Hohlraum ausfüllendem Kohlenstoff-Schaum ein Beheizen des Kohlenstoff-Pulvers gemeinsam mit dem Werkstück erfolgt und wobei die Partikel des Kohlenstoff-Pulvers im Anlieferungszustand kleiner sind als nach dem Aufschäumen.

In Ausgestaltung der Erfindung erfolgt das Beheizen zum Aufschäumen des Kohlenstoff-Pulvers durch die Inbetriebnahme der bestimmungsgemäßen Verwendung des Bauelementes.

In weiterer Ausgestaltung der Erfindung ist das Bauelement ein doppelwandiges, insbesondere abgasführendes Rohr mit direkt in den Doppelwandungshohlraum eingefülltem Kohlenstoff-Pulver, und das Aufschäumen erfolgt beim ersten Erreichen der Betriebstemperatur des Rohres.

In anderer Ausgestaltung der Erfindung ist das Bauelement ein Profilträger (beispielsweise ein Längsträger oder eine A-, B- oder C-Säule für eine Kfz-Karosserie) mit lagesicher in dem mindestens einen Hohlraum angeordneten, hermetisch eingeschlossenes Kohlenstoff-Pulver beinhaltenden Aluminium-Folienbeuteln.

In weiterer Ausgestaltung der Erfindung sind die Kohlenstoff-Pulver beinhaltenden Aluminium-Folienbeutel bereits vor oder in der Rohbauphase der Karosserie in den mindestens einen Hohlraum eingebracht, um mit der Karosserie eine Tauchlackierung zu durchlaufen, so daß das Aufschäumen gemeinsam mit dem Einbrennen des Tauchlacks erfolgt.

Die Erfindung ist anhand von Ausführungsbeispielen in der Zeichnung schematisch dargestellt und wird im folgenden unter Bezugnahme auf die Zeichnung näher erläutert.
- Figur 1: zeigt einen Längsschnitt durch ein doppelwandiges Rohr, dessen Hohlräume erfindungsgemäß mit Kohlenstoff-Pulver enthaltenden Beuteln versehen sind.
- Figur 2: zeigt ein Detail aus einem zwischen zwei Blechen befindlichen Hohlraum, der nach dem erfindungsgemäßen Verfahren auf Distanz ausgeschäumt wird.
- Figuren 3a und 3b: zeigen Querschnitte erfindungsgemäß ausgeschäumter Werkstücke.

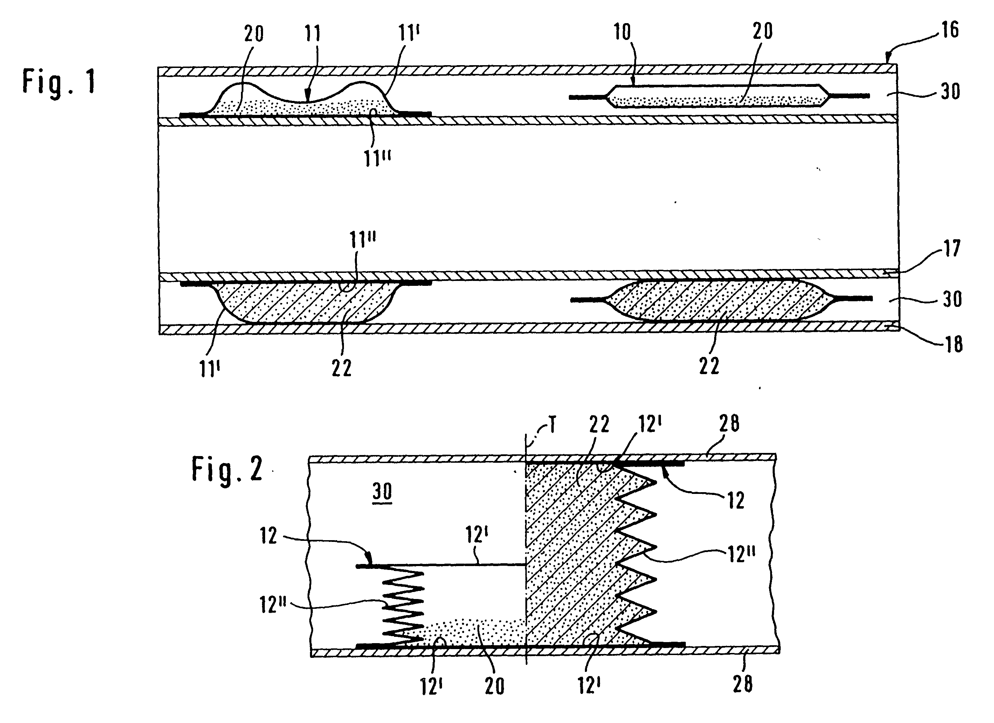

Figur 1 zeigt einen Längsschnitt durch ein doppelwandiges Rohr 16, das aus einem Innenrohr 17 und einem konzentrisch zu dem Innenrohr 17 angeordneten Außenrohr 18 besteht, wobei zwischen Innenrohr 17 und Außenrohr 18 ein vorteilhafterweise abgeschlossener Hohlraum 30 liegt.

Der Doppelwandungshohlraum 30 des doppelwandigen Rohres 16 soll erfindungsgemäß mit Kohlenstoff-Schaumstoff ausgefüllt werden. Zur Veranschaulichung der Funktionsweise des erfindungsgemäßen Verfahrens ist der in der Darstellung der Figur 1 oben liegende Doppelwandungshohlraum 30 vor dem Ausschäumen und der in der Darstellung unten liegende Doppelwandungshohlraum 30 nach dem Ausschäumen dargestellt.

Zur Durchführung des erfindungsgemäßen Verfahrens werden in den auszufüllenden Doppelwandungshohlraum 30 Aluminium-Folienbeutel 10, 11 eingebracht, die mit Kohlenstoff-Pulver 20 befüllt und hermetisch verschlossen sind. Dabei kann es sich, wie im Beispiel des dargestellten Aluminium-Folienbeutels 10, um einen aus zwei Lagen gleichen Zuschnitts zusammengeschweißten Beutel handeln. Andererseits sind auch Beutelformen möglich, die sich bei einer Expansion (Aufschäumen) des in dem Beutel befindlichen Kohlenstoff-Pulvers 20 gerichtet ausdehnen, wie dies durch das Beispiel des Aluminium-Folienbeutels 11 dargestellt ist, der aus einer ersten, innenrohrseitig angebrachten Lage 11'' und aus einer zweiten Lage 11' besteht, wobei die zweite Lage 11' mit der ersten Lage 11'' verschweißt ist, jedoch eine größere Fläche aufweist, so daß bei einer Expansion des Inhalts des Folienbeutels 11 die erste Lage 11'' plan an der Außenfläche des Innenrohrs 17 anliegend verbleibt, während sich die zweite Lage 11' an die Innenfläche des Außenrohrs 18 anlegt (vgl. unteren Abschnitt des Rohres 16).

In dem in der Darstellung der Figur 1 unteren Abschnitt des Rohres 16 ist der Doppelwandungshohlraum 30 nach erfolgtem Aufschäumen des Kohlenstoff-Pulvers 20 zu Kohlenstoff-Schaum 22 dargestellt. Zum Aufschäumen wird das Werkstück, im vorliegenden Falle das doppelwandige Rohr 16, gemeinsam mit den darin angeordneten, das Kohlenstoff-Pulver 20 enthaltenden Beuteln 10, 11 bis auf eine Temperatur erhitzt, bei welcher das Kohlenstoff-Pulver 20 zu Kohlenstoff-Schaum 22 aufschäumt. Das Aufschäumen erfolgt unter Ausdehnung der Folienwandung. Die Folienbeutel 10, 11 werden durch das Aufschäumen des Kohlenstoff-Pulvers 20 praktisch prall aufgepumpt und legen sich derart an die Innenwandungen des auszufüllenden Hohlraums 30 an.

Figur 2 zeigt ein weiteres Ausführungsbeispiel des erfindungsgemäßen Verfahrens mit zwei parallel angeordneten Blechen 28, die zwischen sich einen Hohlraum 30 begrenzen, der mit Kohlenstoff-Schaum ausgeschäumt werden soll. Aus Gründen der Übersichtlichkeit sind die beiden Stirnenden des Hohlraums 30 nicht eingezeichnet.

Zur besseren Verdeutlichung der Funktionsweise des erfindungsgemäßen Verfahrens ist der in Figur 2 dargestellte Hohlraum 30 mittels einer Trennlinie T in einen linksseitigen und einen rechtsseitigen Bereich aufgeteilt, wobei der linksseitige Bereich den Zustand vor dem Ausschäumen, der rechtsseitige Bereich den Zustand nach dem Ausschäumen darstellt.

In dem zwischen den beiden Blechen 28 liegenden Hohlraum 30 ist ein Aluminium-Folienbeutel 12 angeordnet, der aus zwei im wesentlichen parallel zueinander liegenden Folienlagen 12' und einer die beiden Folienlagen 12' entlang ihres äußeren Randes in Art eines Faltenbalges miteinander verbindenden gefalteten Lage 12'' besteht. Im Innern des Folienbeutels 12 ist, wie schon vorstehend beschrieben, Kohlenstoff-Pulver eingebracht. Beim Erhitzen des Folienbeutels 12 gemeinsam mit den Blechen 28 wird ein Aufschäumen des Kohlenstoff-Pulvers 20 zu Kohlenstoff-Schaum 22 erreicht, wodurch die beiden im wesentlichen parallel zueinanderliegenden Lagen 12' des Folienbeutels 12 unter Ausdehnung der gefalteten Lage 12' auseinandergedrückt werden, wodurch sie die beiden Bleche 28 beaufschlagen, so daß der Hohlraum 30 ausgefüllt ist. Soll eine vollständige Befüllung des Hohlraums 30 stattfinden, so wird zweckmäßigerweise eine größere Anzahl von beschriebenen Aluminium-Folienbeuteln 12 eingebracht.

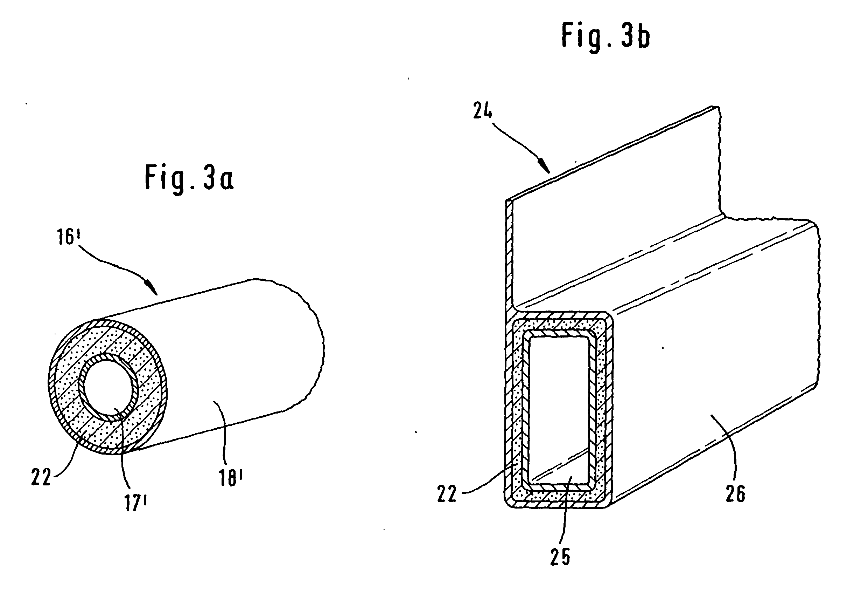

Figur 3a zeigt in perspektivischer Darstellung einen Querschnitt durch ein nach dem erfindungsgemäßen Verfahren befülltes doppelwandiges Rohr 16', das aus einem Innenrohr 17' und einem im wesentlichen konzentrisch dazu angeordneten Außenrohr 18' besteht. Der zwischen Innenrohr 17' und Außenrohr 18' befindliche abgeschlossene Doppelwandungshohlraum ist mit Kohlenstoff-Schaum 22 ausgefüllt, wobei aufgrund des geringen Querschnitts des Doppelwandungshohlraums das Kohlenstoff-Pulver direkt in den Hohlraum eingebracht war, ohne Verwendung eines Folienbeutels.

Figur 3b zeigt in perspektivischer Darstellung einen Querschnitt durch einen Profilträger 24, dessen durch ein Innenprofil 25 und ein Außenprofil 26 gebildeter abgeschlossener Hohlraum nach dem erfindungsgemäßen Verfahren mit Kohlenstoff-Schaum 22 ausgefüllt ist, wobei auch hier aufgrund des geringen Querschnitts das Kohlenstoff-Pulver direkt in den Profilhohlraum eingebracht war.

## Patentansprüche

1. Verfahren zum Füllen von Hohlräumen (30) in Werkstücken oder Halbzeugen mit den folgenden Schritten:
- lagesicheres Einbringen von thermisch aufschäumbarem Kohlenstoff-Pulver (20) in dem zu füllenden Hohlraum (30) des Werkstücks oder Halbzeugs und
- Beheizen des Kohlenstoff-Pulvers (20) gemeinsam mit dem Werkstück oder Halbzeug derart, daß das Kohlenstoff-Pulver (20) aufquillt und als Kohlenstoff-Schaum (22) den Hohlraum (30) ausfüllt, wobei die Partikel des Kohlenstoff-Pulvers im Anlieferungszustand kleiner sind als nach dem Aufschäumen.

2. Verfahren nach Anspruch 1, bei dem das lagesichere Einbringen des Kohlenstoff-Pulvers bei doppelwandigen Werkstücken, insbesondere Rohren (16') und Profilen (24), durch direktes Einfüllen des Kohlenstoff-Pulvers (20) in den Doppelwandungshohlraum erfolgt.

3. Verfahren nach Anspruch 1, bei dem das Kohlenstoff-Pulver (20) zum lagesicheren Einbringen in den Hohlraum (30) in verschlossenen Aluminium-Folienbeuteln (10, 11, 12) hermetisch eingeschlossen angeordnet ist.

4. Verfahren nach einem der Ansprüche 1 bis 3, bei dem das Beheizen durch einen zur weiteren Bearbeitung des Werkstücks oder Halbzeugs notwendigen Arbeitsvorgang erfolgt.

5. Verfahren nach Anspruch 4, bei dem zum Füllen von Karosseriehohlräumen das Kohlenstoff-Pulver (20) bereits in der Rohbauphase der Karosserie in die Hohlräume (30) eingebracht wird, mit der Karosserie eine Tauchlackierung durchläuft und das Aufschäumen gemeinsam mit dem Einbrennen des Tauchlacks erfolgt.

6. Verfahren nach einem der Ansprüche 1 bis 3, bei dem das Beheizen durch die Inbetriebnahme der bestimmungsgemäßen Verwendung des Werkstücks erfolgt.

7. Verfahren nach Anspruch 6, bei dem zum Füllen von Doppelwandungshohlräumen eines doppelwandigen Auspuffrohres (16') das Kohlenstoff-Pulver (20) vor der Endmontage in die zu füllenden Doppelwandungshohlräume eingebracht wird und das Aufschäumen beim ersten Erreichen der Betriebstemperatur des Auspuffrohres (16') erfolgt.

8. Bauelement, insbesondere Werkstück oder Halbzeug, zum An- oder Einbau in ein Kraftfahrzeug, mit mindestens einem Hohlraum (30), in den thermisch aufschäumbares Kohlenstoff-Pulver (20) lagesicher eingebracht ist, wobei zum Aufquellen des Kohlenstoff-Pulvers (20) zur Bildung von den Hohlraum (30) ausfüllendem Kohlenstoff-Schaum (22) ein Beheizen des Kohlenstoff-Pulvers (20) gemeinsam mit dem Bauelement erfolgt und wobei die Partikel des Kohlenstoff-Pulvers im Anlieferungszustand kleiner sind als nach dem Aufschäumen.

9. Bauelement nach Anspruch 8, bei dem das Beheizen durch die Inbetriebnahme der bestimmungsgemäßen Verwendung des Bauelements erfolgt.

10. Bauelement nach Anspruch 9, bei dem das Bauelement ein doppelwandiges, insbesondere abgasführendes Rohr (16') mit direkt in den Doppelwandungshohlraum eingefülltem Kohlenstoff-Pulver (20) ist, und bei dem das Aufschäumen beim ersten Erreichen der Betriebstemperatur des Rohres (16') erfolgt.

11. Bauelement nach Anspruch 8, bei dem das Bauelement ein Profilträger (24) mit lagesicher in den mindestens einen Hohlraum (30) angeordneten, hermetisch eingeschlossenes Kohlenstoff-Pulver (20) beinhaltenden Aluminium-Folienbeuteln (10, 11, 12) ist.

12. Bauelement nach Anspruch 11, bei dem die Kohlenstoff-Pulver (20) beinhaltenden Aluminium-Folienbeutel (10, 11, 12) bereits vor oder in der Rohbauphase der Karosserie in den mindestens einen Hohlraum (30) eingebracht sind, um mit der Karosserie eine Tauchlackierung zu durchlaufen, so daß das Aufschäumen gemeinsam mit dem Einbrennen des Tauchlacks erfolgt.

## Claims

1. Method of filling cavities (30) in workpieces or semi-finished products comprising the following steps:
- introducing heat-expandable carbon powder (20) so as to be contained in the cavity (30) of the workpiece or semi-finished product to be filled and
- heating the carbon powder (20) together with the workpiece or semi-finished product so that the carbon powder (20) swells and fills out the cavity (30) in the form of carbon foam (22), the particles of carbon powder in the delivered state being smaller than after foaming.

2. Method as claimed in claim 1, whereby in the case of double-walled workpieces, in particular pipes (16') and sections (24), the carbon powder is introduced in a contained position by filling the double-walled cavity with the carbon powder (20) directly.

3. Method as claimed in claim 1, in which the carbon powder (20) to be introduced so as to be contained in the cavity (30) is contained in closed, hermetically sealed aluminium foil bags (10, 11, 12).

4. Method as claimed in one of claims 1 to 3, whereby heat is applied by means of a work process needed for subsequent processing of the workpiece or semi-finished product.

5. Method as claimed in claim 4, whereby, when filling bodywork cavities, the carbon powder (20) is introduced into the cavities (30) as early as the shell-building phase of the bodywork, is fed through a dip varnishing process with the bodywork and foaming takes place at the same time as the dip varnish is stoved.

6. Method as claimed in one of claims 1 to 3, whereby heating takes place when the workpiece is first used in its intended application.

7. Method as claimed in claim 6, in which, when filling double-walled cavities of a double-walled exhaust pipe (16'), the carbon powder (20) is introduced into the double-walled cavities to be filled prior to final mounting and foaming takes place when the exhaust pipe (16') first reaches its operating temperature.

8. Component, in particular a workpiece or semi-finished product, for mounting on or integrating in a motor vehicle, having at least one cavity (30) in which the heat-expandable carbon powder (20) is introduced so as to be contained, in which heat is applied to the carbon powder (20) together with the component in order to swell the carbon powder (20) to form the carbon foam (22) filling out the cavity (30) and in which the particles of the carbon powder in the delivered state are smaller than after foaming.

9. Component as claimed in claim 8, whereby heating takes place when the component is first used in its designated application.

10. Component as claimed in claim 9, the component being a double-walled pipe (16'), in particular for exhaust gas, the double-walled cavity being filled with carbon powder (20) directly, and foaming takes place when the pipe (16') first reaches its operating temperature.

11. Component as claimed in claim 8, the component being a beam section (24) with hermetically sealed aluminium foil bags (10, 11, 12) containing carbon powder (20) arranged so as to be contained in the at least one cavity (30).

12. Component as claimed in claim 11, in which the aluminium foil bags (10, 11, 12) containing the carbon powder (20) are introduced into the at least one cavity (30) as early as prior to or during the shell-building phase of the bodywork so as to be fed with the bodywork through a dip varnishing process so that foaming takes place at the same time as the dip varnish is stoved.

## Revendications

1. Procédé de remplissage d'espaces creux (30) dans des pièces façonnées ou des produits semi-finis, avec les étapes ci-après:
- insertion en position sûre d'une poudre de carbone (20) susceptible de mousser par action de la chaleur dans l'espace creux (30) à remplir de la pièce façonnée ou du produit semi-fini, et
- chauffage de la poudre de carbone (20), conjointement avec la pièce façonnée ou produit semi-fini, de manière que la poudre de carbone (20) gonfle et remplisse l'espace creux (30) sous forme de mousse de carbone (22), les particules de la poudre de carbone, lorsqu'elle est à l'état de livraison, étant plus petites qu'une fois le moussage effectué.

2. Procédé selon la revendication 1, dans lequel l'insertion en position sûre de la poudre de carbone dans le cas de pièce façonnée à double paroi, en particulier de tubes (16') et de profilés (24), s'effectue par remplissage direct de l'espace creux de la double paroi avec la poudre de carbone (20).

3. Procédé selon la revendication 1, dans lequel, pour obtenir une insertion en position sûre dans l'espace creux (30), la poudre de carbone (20) est enclose hermétiquement dans des sachets en feuille d'aluminium (10,11,12) fermés.

4. Procédé selon l'une des revendications 1 à 3, dans lequel le chauffage s'effectue par un processus nécessaire pour la continuation de l'usinage de la pièce façonnée ou du produit semi-fini.

5. Procédé selon la revendication 4, dans lequel, pour remplir des espaces creux de carrosserie, la poudre de carbone (20) est déjà insérée dans les espaces creux (30) au stade de la phase de construction brute de la carrosserie, est soumise avec la carrosserie à un vernissage ou peinture par immersion et le moussage s'effectuant conjointement avec la cuisson du vernis appliqué par immersion.

6. Procédé selon l'une des revendications 1 à 3, dans lequel le chauffage s'effectue par la mise en service s'opérant lors de l'utilisation conforme de la pièce façonnée.

7. Procédé selon la revendication 6, dans lequel, pour remplir des espaces creux de paroi double d'un tube d'échappement (16') à paroi double, la poudre de carbone (20) est insérée avant le montage final dans les espaces creux à paroi double à remplir, et le moussage se faisant lors de la première atteinte de la température de fonctionnement du tuyau d'échappement (16').

8. Composant, en particulier pièce façonnée ou produit semi-fini, à rapporter ou insérer dans un véhicule automobile, avec au moins un espace creux (30) dans lequel de la poudre de carbone (20), susceptible de mousser par effet de la chaleur, est insérée en position sûre, un chauffage de la poudre de carbone (20), conjointement avec le composant, étant effectué pour obtenir le gonflement de la poudre de carbone (20) dans le but de former de la mousse de carbone (22) remplissant l'espace creux (30), et les particules de poudre de carbone étant plus petites à l'état de la livraison qu'une fois moussées.

9. Composant selon la revendication 8, dans lequel le chauffage s'effectue par la mise en service s'opérant en cas d'utilisation conforme du composant.

10. Composant selon la revendication 9, dans lequel le composant est un tube (16') à double paroi, en particulier véhiculant des gaz d'échappement avec de la poudre de carbone (20) directement introduite dans l'espace creux de la double paroi et composant pour lequel le moussage se fait lors de la première atteinte de la première température de fonctionnement du tube (16').

11. Composant selon la revendication 8, dans lequel le composant est un support profilé (24) avec des sachets en feuille d'aluminium (10,11,12) disposés en position sûre dans le au moins un espace creux (30), sachets contenant de la poudre de carbone (20) enclose de façon hermétique.

12. Composant selon la revendication 11, dans lequel des sachets en feuille d'aluminium (10,11,12), contenant la poudre de carbone (20), sont introduits dans le au moins un espace creux (30) avant ou lors de la phase de construction brute de la carrosserie, afin d'être soumis, avec la carrosserie, à un processus de laquage ou peinture par immersion, de sorte que le moussage s'effectue conjointement avec la cuisson du vernis appliqué par immersion.
